Europäisches Patentamt

(19) **European Patent Office**

Office européen des brevets

(11) Numéro de publication: **0 034 537**
**B1**

(12) **FASCICULE DE BREVET EUROPEEN**

(45) Date de publication du fascicule du brevet:
**27.06.84**

(21) Numéro de dépôt: **81400225.9**

(22) Date de dépôt: **13.02.81**

(51) Int. Cl.³: **G 01 F 23/00,** G 01 F 23/04,
G 01 F 19/00 // G01B5/14

(54) **Appareil de repérage de niveau.**

(30) Priorité: **19.02.80 FR 8003569**

(43) Date de publication de la demande:
**26.08.81 Bulletin 81/34**

(45) Mention de la délivrance du brevet:
**27.06.84 Bulletin 84/26**

(84) Etats contractants désignés:
**AT BE CH DE FR GB IT LI LU NL SE**

(56) Documents cités:
**DE - A - 2 833 087**
**FR - A - 2 206 494**
**FR - A - 2 254 782**
**FR - A - 2 296 167**
**FR - A - 2 413 631**
**FR - A - 2 416 050**

(73) Titulaire: **FONDERIE ET ATELIERS DES SABLONS
Société Anonyme dite, 7, rue Royale, F-45000 Orleans
(FR)**

(72) Inventeur: **Boudin, Daniel, Résidence du soleil
Levant 57, rue du Gros Raisin, F-45100 Orleans (FR)**
Inventeur: **Godat, Jean, 35, Allée du Houx, F-45160 Olivet
(FR)**
Inventeur: **Krzywdziak, Alain, 426 rue de Bonneveaux,
F-45560 Saint Denis En Val (FR)**
Inventeur: **Parmenon, Daniel, 17, rue du Docteur
Schweitzer, F-45100 Orleans La Source (FR)**

(74) Mandataire: **Brot, Philippe et al, CABINET BROT 83, rue
d'Amsterdam, F-75008 Paris (FR)**

BUNDESDRUCKEREI BERLIN

## Description

La présente invention concerne un appareil de repérage de niveau tel que décrit dans le préambule de la revendication 1 et, pouvant être utilisé, mais non exclusivement, à diviser en parties égales un segment de longueur variable par un nombre diviseur quelconque entier.

Elle s'applique notamment au dosage de produits liquides et en particulier à la réalisation de mélanges de peinture dans lesquels les différents constituants sont dosés en partie de mélange.

On sait qu'un tel appareil de repérage de niveau comprend habituellement une sonde, mobile verticalement, et dont la position par rapport à un point fixe tel que, par exemple, le fond d'un récipient, est relevée grâce à au moins deux transducteurs, à savoir, un transducteur servant à régler l'amplification de l'appareil, c'est-à-dire la longueur du segment à diviser qui est concrétisée par l'écart maximum entre le point fixe et la sonde, et un transducteur pour mesurer le déplacement entre le point fixe et la sonde, lorsque l'on déplace cette dernière dans l'intervalle du segment.

A l'aide des informations délivrées par ces deux transducteurs, il est possible, à l'aide d'un dispositif du type de celui décrit dans FR-A1-2 413 631, de diviser le segment en parties égales par un diviseur quelconque entier et d'afficher successivement, lorsqu'on déplace la sonde par rapport au point fixe, dans l'intervalle du segment, les divisions successives avec leur numération en partie.

Dans l'application de l'appareil selon l'invention au dosage volumétrique des parties de liquides, le segment de longueur variable est concrétisé par la distance qui sépare l'extrémité de la sonde et le fond du récipient de dosage.

Ainsi, pour effectuer un dosage à l'aide d'un dispositif pour diviser en parties égales un segment de longueur variable du type de celui précédemment mentionné, on affiche tout d'abord la longueur du segment à diviser, c'est-à-dire la hauteur totale désirée de liquide à préparer, par exemple 130 mm pour 1000 divisions du compteur ou 195 mm pour 1500 divisions, avec la même amplification.

En déplaçant la sonde du fond du récipient de dosage jusqu'à la hauteur totale de liquide à préparer, l'affichage indiquera les fractions successives, de 0 à 1000 (et même au-delà, en cas de millièmes supplémentaires à rajouter).

Par FR-A1-2 296 167, on connaît un appareil de repérage de niveau comprenant une tige portant, à sa partie inférieure, une palette de repérage de niveau et pouvant être déplacée verticalement à partir d'un bouton de manoeuvre. Ce bouton entraîne, par l'intermédiaire de pignons, une vis mère sur laquelle est vissée une pièce dont une partie forme écrou et qui est solidaire d'une colonne portant une potence sur laquelle est fixée ladite tige. La susdite vis attaque directement, par un système de pignons de renvoi, l'axe d'un compteur qui permet d'afficher les volumes de liquide dont le niveau correspond à la position de l'arête inférieure de la palette.

Par FR-A1-2 416 050 on connaît également un appareil pour la réalisation de mélanges de produits fluides faisant intervenir une colonne verticale fixée sur un socle, un ruban sans fin gradué supporté par deux galets montés sur la colonne, une tige filetée parallèle à la colonne et tournant librement sur son axe par actionnement d'un bouton moleté monté à son extrémité, et une potence montée coulissante sur la colonne et portant une jauge de profondeur dont l'extrémité porte une palette. Cette potence comprend pour sa manoeuvre un engrenage entraîné par une molette et venant en prise sur la tige filetée, ainsi que, pour permettre l'affichage de la mesure, un index disposé à proximité du ruban gradué. Une telle disposition permet d'obtenir un réglage grossier et un réglage fin de la position de la potence grâce à la susdite molette et au susdit bouton moleté. Le réglage du zéro peut en outre être obtenu en faisant circuler le ruban sur ses galets.

Les deux appareils connus précédemment décrits permettent d'effectuer la mesure directe d'un volume de liquide contenu dans un récipient. Toutefois ils ne conviennent pas pour réaliser des mélanges dans lesquels les différents constituants sont dosés en partie de mélange.

L'invention a donc plus particulièrement pour but la réalisation d'un appareil de repérage de niveau présentant une grande précision et facile à manipuler, de manière à ce qu'il puisse être utilisé par une main-d'oeuvre peu familiarisée aux techniques de dosage et, en particulier, aux dosages en parties de mélange, par exemple par des carrossiers en automobile.

A cet effet, l'appareil de repérage de niveau selon l'invention comprend tout d'abord, d'une façon analogue à celle décrite dans le brevet FR 2 296 167 :

— un premier boîtier fixé au support de l'appareil;
— une sonde portant à son extrémité inférieure un détecteur de niveau monté sur un élément de support solidaire d'une colonne verticale coulissant axialement dans une glissière fixée dans ledit boîtier;
— une tige verticale montée pivotante autour de son axe par rapport au boîtier à proximité de ladite colonne, et pouvant être entraînée en rotation au moyen d'un dispositif d'entraînement commandable manuellement;
— un écrou solidaire de ladite colonne, dont le filetage coopère avec le filetage de la tige filetée de manière à obtenir un déplacement axial de la colonne lors de la rotation de la tige filetée; et
— un dispositif de transmission assurant la commande d'un premier potentiomètre destiné à fournir une tension représentative de la position de la colonne.

Cet appareil est caractérisé en ce que ladite sonde est montée avec possibilité de réglage en hauteur, ledit écrou est débrayable et peut prendre, sous l'effet d'un dispositif de commande, deux positions, à savoir une position embrayée dans laquelle les filets de l'écrou coopèrent avec le filetage de la tige filetée, de manière à obtenir un déplacement axial de la colonne lors de la rotation de la tige filetée, et une position débrayée dans laquelle les filets de l'écrou sont écartés du filetage de la tige filetée, cette position débrayée autorisant un libre coulissement de la colonne dans la glissière, en ce que ledit dispositif de transmission consiste en une courroie crantée ou une chaîne sans fin, s'étendant parallèlement à ladite colonne et montée sur deux galets respectivement supérieur et inférieur, dont l'un entraîne ledit premier potentiomètre, ladite courroie ou ladite chaîne étant entraînée par ladite colonne au moyen d'une pièce de liaison, et en ce que, sur le galet inférieur, est monté un dispositif limiteur de vitesse.

On notera que le détecteur de niveau peut, avantageusement, consister en une palette comportant, dans sa bordure inférieure, une protubérance prévue de manière à provoquer, lorsqu'elle rentre en contact avec le liquide, un pré-flash capillaire, et une partie inclinée portant un repère indiquant le moment où le liquide atteint le niveau définitif.

Des modes de réalisation de l'invention seront décrits ci-après, à titre d'exemples non limitatifs, avec référence aux dessins annexés dans lesquels:

La fig. 1 est une coupe schématique permettant d'expliquer le principe de l'appareil de repérage de niveau selon l'invention;

les fig. 2 et 3 représentent respectivement en coupes, verticale longitudinale (fig. 2) et transversale (fig. 3) un mode de réalisation de l'appareil;

la fig. 4 est une coupe verticale transversale partielle permettant de mettre en évidence le mode du montage du potentiomètre;

la fig. 5 est une coupe horizontale selon A-A de la fig. 1;

la fig. 6 représente le dispositif de repérage, vu de côté;

les fig. 7 et 8 représentent deux types de détecteurs à palettes actuellement utilisés sur le marché;

la fig. 9 représente un détecteur à palette perfectionné selon l'invention;

la fig. 10 est un croquis à plus grande échelle représentant le profil du détecteur à palette représenté fig. 9, avec, au-dessous, sa courbe de sensiblilité.

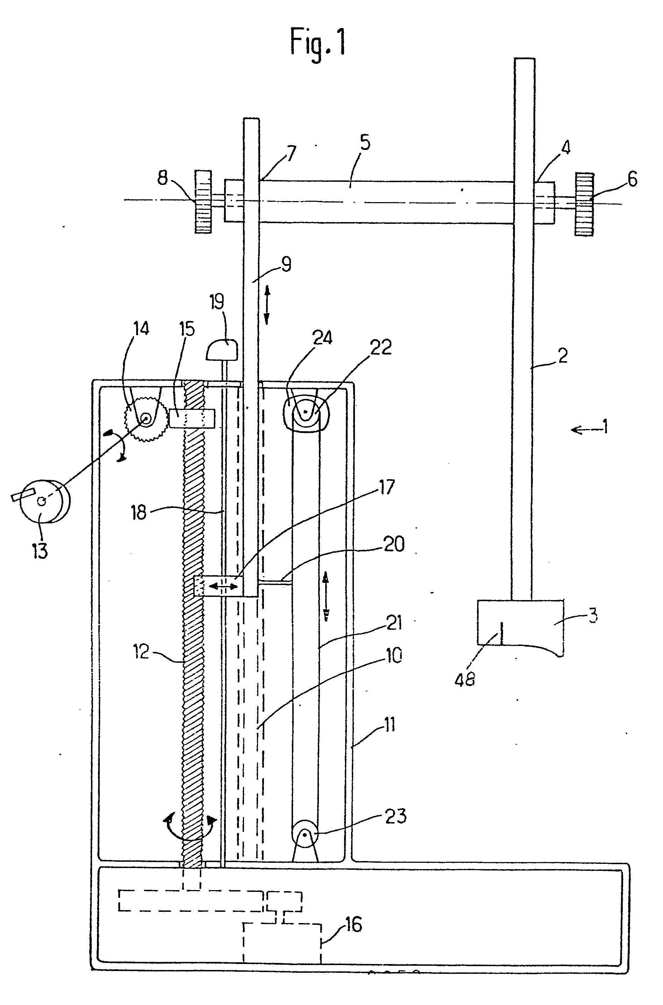

Avec référence à la fig. 1, l'appareil de repérage de niveau comprend une sonde 1 constituée par une tige verticale 2 portant, à son extrémité inférieure, une palette de détection de niveau 3 et qui passe, dans sa partie supérieure, au travers d'un perçage 4 ménagé dans une traverse horizontale 5. La fixation de cette tige 2 dans la traverse 5 peut être réalisée grâce à une vis à tête moletée 6 venant se fixer dans la traverse 5.

La traverse 5 est elle-même solidarisée au moyen d'un montage similaire (perçage 7, vis moletée 8) à une colonne verticale 9 montée coulissante dans une glissière 10 (représentée schématiquement en traits interrompus) montée fixement à l'intérieur du boîtier 11 du dispositif.

A proximité de cette glissière 10 et à l'intérieur du boîtier 11, est montée pivotante une tige filetée verticale 12 entraînée, à partir d'un volant de manoeuvre 13, par l'intermédiaire de deux pignons hélicoïdaux 14, 15 dont l'un est solidaire de la tige filetée 12. Cette tige 12 pourrait également être entraînée à partir d'un moteur télécommandé 16 (représenté en traits interrompus).

Par ailleurs, sur la partie inférieure de la colonne 9 est monté un écrou débrayable 17 commandé par une tige 18 actionnable par un bouton 19.

Sous la commande de cette tige 18, l'écrou débrayable 17 peut prendre deux positions à savoir:

— une position embrayée dans laquelle il coopère avec la tige filetée 12, de sorte que la rotation de la tige filetée 12 entraîne un coulissement axial de la colonne 9, et

— une position débrayée dans laquelle les filets de l'écrou 17 sont dégagés du filetage de la tige filetée 12, de sorte que la colonne 9 peut coulisser librement dans sa glissière 10.

L'extrémité inférieure de la colonne 9 est reliée, grâce à une pièce de liaison 20, à une courroi crantée 21 montée sur deux galets 22, 23 dont l'un, le galet 22, entraîne un potentiomètre 24 qui fournit en conséquence, à tout moment, une tension représentative de la position de la colonne 9.

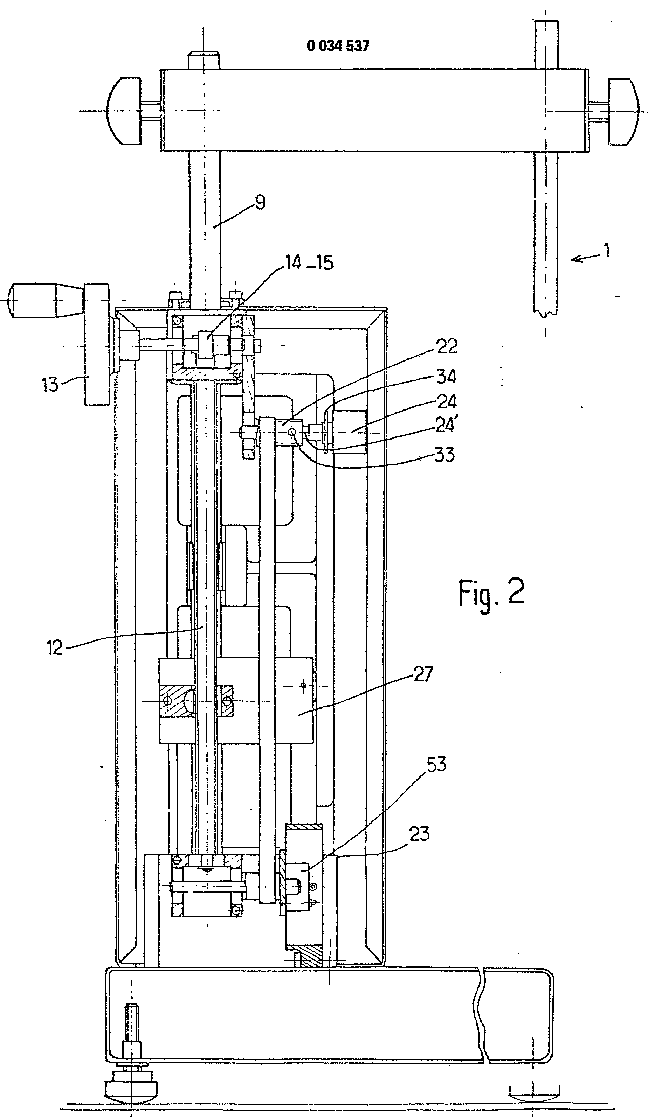

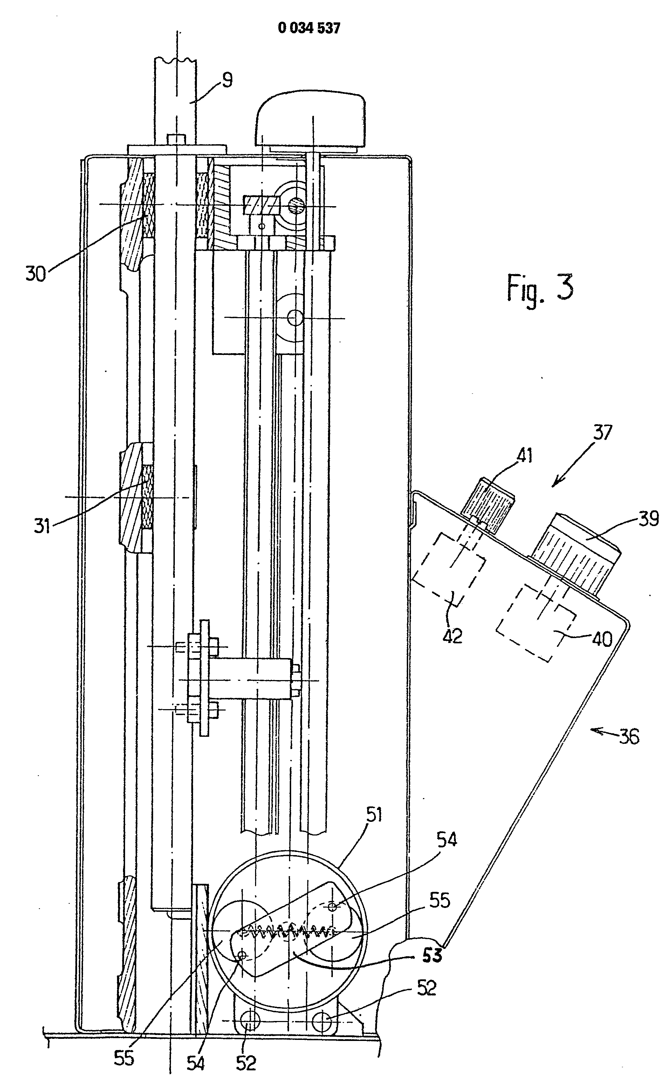

Les fig. 2 à 6 ne font que préciser des détails d'exécution d'un mode de réalisation d'un appareil de repérage de niveau fonctionnant sur un même principe que celui représenté fig. 1.

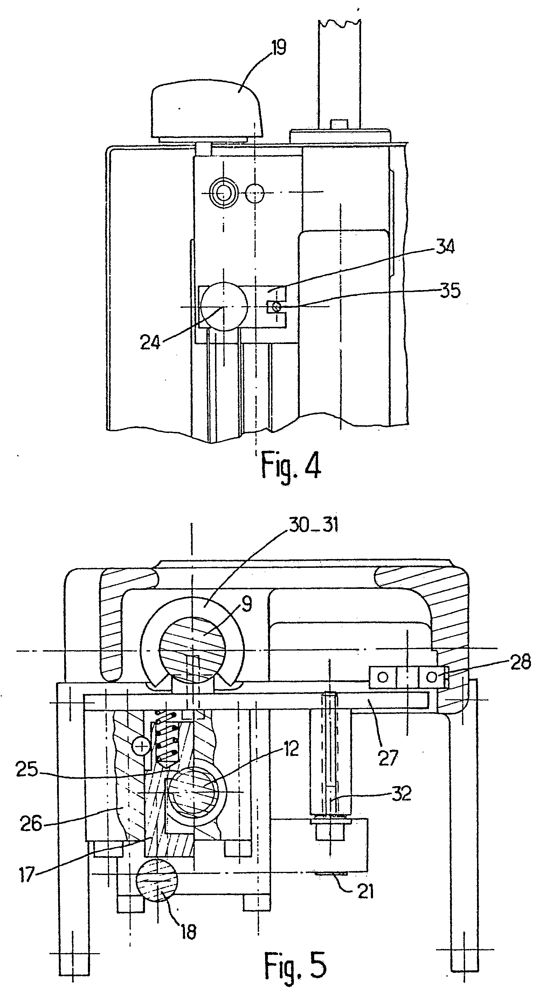

Ainsi, dans ce dispositif, d'une façon analogue à celle précédemment décrite, un volant de manoeuvre 13 commande la rotation d'une tige filetée 12 par l'intermédiaire de pignons hélicoïdaux 14, 15. Sur cette tige filetée 12 engrène un écrou débrayable 17 (fig. 5) qui ne comprend qu'une fraction de filet 25 et est commandé au moyen d'une tige verticale 18 excentrée actionnée par un bouton 19.

L'écrou 17 est monté, avec rappel par ressort, dans un boîtier 26 qui est lui même solidaire d'une colonne verticale 9 par l'intermédiaire d'une plaque 27, laquelle est bloquée en rotation par l'intermédiaire d'un roulement à billes 28 coopérant avec une chemin de roulement solidaire du corps de l'appareil.

Sur cette colonne verticale 9, qui coulisse entre deux paliers 30, 31, est fixée une traverse 5 qui porte à son autre extrémité la sonde 1 dont la position en hauteur est réglable au moyen de la vis à tête moletée 6.

Sur la plaque 27 vient se fixer, grâce à une vis 32 (fig. 5), une courroie crantée 21 qui engrène sur deux galets dentés 22, 23, qui tournent librement dans des roulements à billes. A l'intérieur du galet 22, est prévu un alésage recevant l'extrémité de l'axe 24' du poteniomètre 24, l'axe étant immobilisé par une vis 33. Le corps du potentiomètre 24 est bloqué en rotation par une plaquette 34 elle-même empêchée de tourner par un ergot 35 (fig. 4).

On notera que, par cette disposition, le potentiomètre 24 ne subit aucune contrainte qui pourraît être créée par un mauvais alignement de l'axe 24' puisqu'il est suspendu sur un axe 24' et seulement maintenu en rotation.

Par ailleurs, du fait que le potentiomètre 24 ne peut pas accepter une vitesse de rotation élevée (supérieure à 300 tours par minute), ce qui serait le cas si on débraye l'écrou 17 lorsque l'équipage mobile est en position haute, du fait du mouvement uniformément accéléré de descente dû au poids de cet équipage, on a prévu un limiteur de vitesse.

Ce limiteur se compose d'une cloche cylindrique 51 solidaire du bâti par deux vis 52 et concentrique avec l'axe du galet inférieur 23.

Sur ce galet 23 est fixée une pièce cylindrique 53 munie de deux axes 54 qui retiennent deux masselottes 55 dont le poids est calculé de telle manière, qu'au cours de la descente, l'effort centrifuge les applique fortement sur la face interne de la cloche 51 provoquant un effort normal et par conséquent une réaction de frottement s'opposant au mouvement et en tout cas limitant la vitesse maximum de descente des parties mobiles verticalement.

Un ressort de rappel maintient les deux masselottes éloignées de la cloche lorsqu'on utilise l'appareil en mesure, afin d'éviter un frottement parasite.

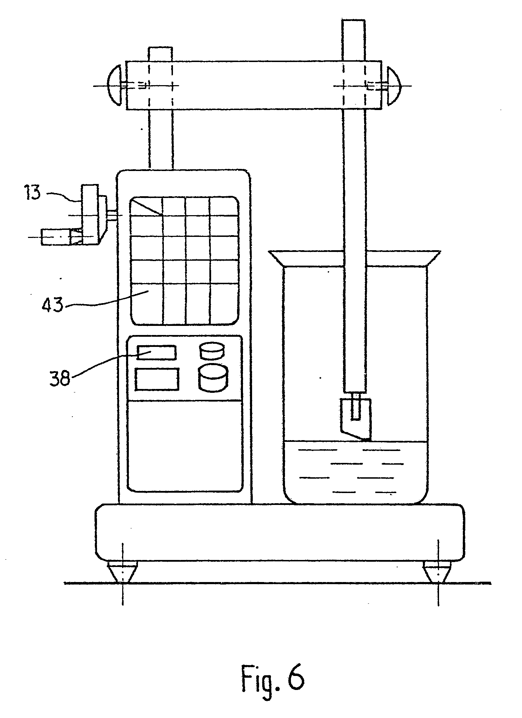

L'appareil de repérage de niveau précédemment décrit comporte, en outre, un boîtier de commande 36 dans lequel est logée toute la partie électronique et, en particulier, un dispositif pour diviser en parties égales un segment de longueur variable du type de celui décrit dans FR-A1-2 413 631. La face avant 37 de ce boîtier de commande 36 comporte les afficheurs luminescents 38 (fig. 6) donnant la numération en parties de mélange, un bouton de comptage 39 commandant le potentiomètre 40 de réglage d'amplification prévu par exemple pour qu'il affiche 1000 divisions pour 10 tours du potentiomètre, et un bouton 41 qui effectue la commande d'un potentiomètre 42 servant à la remise à zéro, en fin de course. Cette face avant comporte en outre une plaque photogravée 43 comportant un tableau à deux entrées donnant le nombre de graduations du potentiomètre d'amplification pour différentes quantités de mélange à préparer et ce, en fonction du diamètre du récipient de dosage.

Ainsi, pour effectuer un dosage, l'opérateur ayant à préparer une certaine quantité de produits, sélectionne sur la plaque photogravée 43, en regard de la quantité à préparer, le diamètre du récipient le plus convenable ainsi que l'indication du réglage correspondant pour le potentiomètre d'amplification 40.

Ensuite, il place le récipient sur l'appareil, remonte la sonde 1 d'une quantité suffisante et rebloque celle-ci provisoirement avec le bouton moleté 6. Puis, en actionnant le bouton de débrayage 19, il laisse redescendre l'ensemble de la traverse 5 et de la colonne 9 jusqu'en fin de course basse. Il ajuste ensuite le compteur 38 à zéro au moyen du potentiomètre 42, et enfin, en débloquant le bouton moleté 6, il laisse descendre la sonde 1 et la palette 3, jusqu'au fond du récipient.

L'appareil se trouve donc réglé à la position zéro. Il suffit ensuite de manoeuvrer le volant 13 jusqu'à l'indication correspondant à la première quantité de produit à mélanger qui apparaît sur les afficheurs luminescents 38.

L'opérateur verse alors, avec les précautions voulues, le liquide dans le récipient jusqu'à observation d'un flash sur la pointe de la palette 3, et, ensuite, en versant très doucement, jusqu'à ce que l'on atteigne le trait 48 gravé sur cette palette.

On procède ensuite au réglage de la deuxième quantité, et ainsi de suite, jusqu'à la division 1000, ou plus, selon les réglages de l'appareil.

Comme précédemment mentionné, le détecteur de niveau disposé à l'extrémité inférieure de la sonde peut consister en une palette permettant d'indiquer à l'opérateur:

a) qu'il approche du niveau final,
b) qu'il atteint le niveau final.

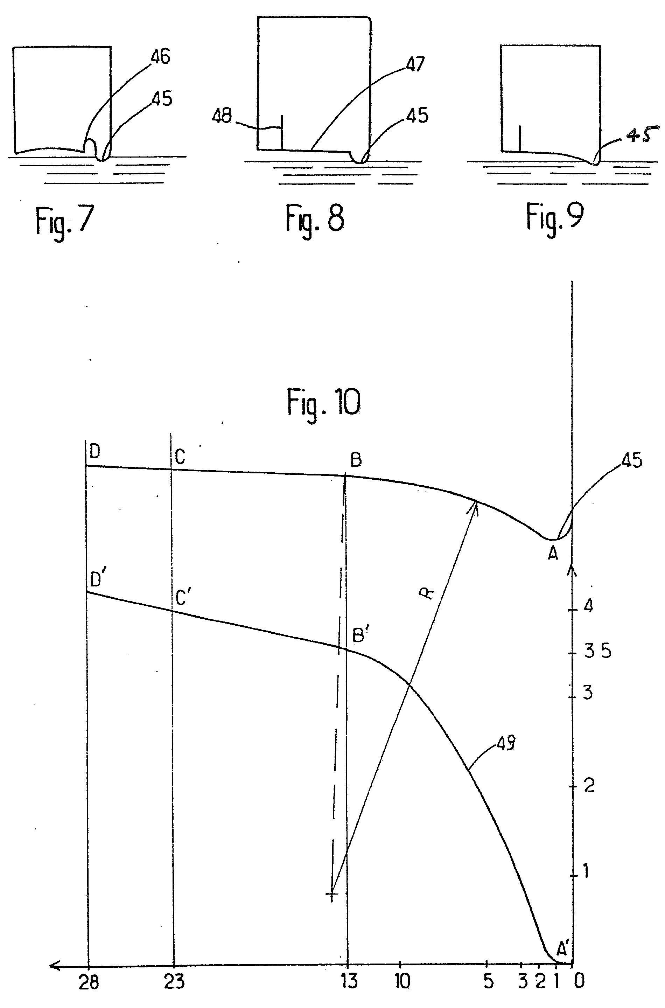

A cet effet, les palettes comportent une protubérance 45 occasionnant un pré-flash capillaire très visible à l'oeil nu, et, quelques millimètres plus haut, une conformation 46 permettant d'obtenir un deuxième flash capillaire (fig. 7), soit une montée progressive 47, jusqu'à un repère gravé 48 (fig. 8).

L'invention propose, en vue d'augmenter la précision de cette détection, un perfectionnement consistant à obtenir une sensibilité variable et progressive depuis le moment où la protubérance 45 a provoqué un pré-flash, jusqu'au moment où il atteint le niveau définitif (fig. 9).

A cet effet, la palette comprend, dans sa bordure inférieure adjacente à la protubérance, une portion circulaire AB de rayon R et de centre X suivie d'une portion droite BCD inclinée par rapport à l'horizontale, la droite XD étant perpendiculaire au segment BD (fig. 10).

A titre d'exemple, on constate sur le croquis représenté fig. 10 à l'échelle 5, que dans la première partie de la palette, la sensibilité (courbe 49) correspond à environ 2,4 mm de déplacement horizontal du point de contact pour 1 mm d'élévation du niveau de liquide (parties A'B' de la courbe de sensibilité).

Par contre, dans B', C', D', on constate qu'une élévation de liquide de 0,1 mm correspond à un déplacement horizontal du point de contact de 2,5 mm, soit 10 fois plus que précédemment.

Il en résulte qu'avec un opérateur moyennement entraîné, on peut très facilement apprécier une différence de niveau de un dixième de millimètre et même un déplacement de niveau lorsque le point de contact se situe dans la partie CD de la palette.

## Revendications

1. Appareil de repérage de niveau du type comportant:

— un premier boîtier (11) fixé au support de l'appareil;
— une sonde (1) portant à son extrémité inférieure un détecteur de niveau (3) monté sur un élément de support (5) solidaire d'une colonne verticale (9) coulissant axialement dans une glissière (10) fixée dans ledit boîtier;
— une tige filetée verticale (12) montée pivotante autour de son axe par rapport au boîtier à proximité de ladite colonne (9) et pouvant être entraînée en rotation au moyen d'un dispositif d'entraînement commandable manuellement (13, 14, 15);
— un écrou (17) solidaire de ladite colonne, dont le filetage coopère avec le filetage de la tige filetée (12) de manière à obtenir un déplacement axial de la colonne (9), lors de la rotation de la tige filetée (12);
— un dispositif de transmission (21, 22, 23) assurant la commande d'un premier potentiomètre (24) destiné à fournir une tension représentative de la position de la colonne; caractérisé en ce que ladite sonde est montée avec possibilité de réglage en hauteur, ledit écrou (17) est débrayable et peut prendre, sous l'effet d'un dispositif de commande, deux positions, à savoir:
— une position embrayée dans laquelle les filets de l'écrou (17) coopèrent avec le filetage de la tige filetée (12), de manière à obtenir un déplacement axial de la colonne (9), lors de la rotation de la tige filetée; et
— une position débrayée dans laquelle les filets de l'écrou sont écartés du filetage de la tige filetée (12), cette position débrayée autorisant un libre coulissement de la colonne (9) dans la glissière (10);

en ce que ledit dispositif de transmission consiste en une courroie crantée (21) ou une chaîne sans fin, s'étendant parallèlement à ladite colonne et montée sur deux galets respectivement supérieur (22) et inférieur (23) dont l'un entraîne ledit premier potentiomètre (24), ladite courroie ou ladite chaîne étant entraînée par ladite colonne au moyen d'une pièce de liaison (20), et en ce que, sur le galets inférieur (23) est monté un dispositif limiteur de vitesse.

2. Appareil selon la revendication 1, caractérisé en ce que le susdit écrou débrayable (17) est monté, avec rappel par ressort, dans un second boîtier (26) qui est lui-même solidaire de la colonne verticale (9) par l'intermédiaire d'une plaque (27).

3. Appareil selon la revendication 1, caractérisé en ce que le galet (22) qui entraîne le premier potentiomètre (24) comprend un alésage dans lequel s'engage et est fixée l'extrémité de l'axe (24') dudit premier potentiomètre (24), et en ce que le corps du premier potentiomètre (24) est bloqué en rotation par une plaquette (34), elle-même empêchée de tourner par un ergot.

4. Appareil selon la revendication 1, caractérisé en ce que le susdit dispositif limiteur de vitesse comprend, solidaire du premier boîtier (11), une cloche (51) concentrique à l'axe du galet inférieur, et en ce que sur ledit galet inférieur est fixée une pièce (53) munie de deux axes (54) qui retiennent excentriquement deux masselottes (55) rappelées par ressort et qui, en tournant, viennent s'appliquer fortement sur la face interne de la cloche sous l'effet de la force centrifuge.

5. Appareil selon la revendication 1, caractérisé en ce qu'il comprend en outre un troisième boîtier de commande (36) dans lequel est logé un dispositif électronique pour diviser en parties égales un segment de longueur variable, et dans lequel la face avant (37) comporte des afficheurs luminescents (38) donnant la numération en parties de mélange, un bouton de comptage commandant un second potentiomètre (40) de réglage d'amplification et un bouton (41) qui effectue la commande d'un troisième potentiomètre (42) servant à la remise à zéro en fin de course.

6. Appareil selon la revendication 5, caractérisé en ce que la susdite face avant comporte une plaque (43) comportant un tableau à deux entrées donnant le nombre de graduations du second potentiomètre (40) pour différentes quantités du mélange à préparer, et ce, en fonction du diamètre du récipient de dosage.

7. Appareil selon la revendication 1, caractérisé en ce que le susdit détecteur de niveau (3) consiste en une palette comportant dans sa bordure inférieure une protubérance (45) prévue de manière à provoquer, lorsqu'elle rentre en contact avec le liquide, un pré-flash capillaire, et une partie inclinée portant un repère (48) indiquant le moment où le liquide atteint le niveau définitif.

8. Appareil selon la revendication 7, caractérisé en ce que la partie inclinée de ladite bordure inférieure adjacente à la protubérance (45) comporte une portion circulaire près de la protubérance (45) suivie d'une portion droite,

— la portion circulaire ayant pour extrémites A et B, A étant l'extrémité du côté de la protubérance, un rayon R et un centre X, et
— la portion de droite ayant pour extrémités B et D, ladite portion de droite étant inclinée par rapport à l'horizontale, le segment de droite d'extrémités X et B étant perpendiculaire à ladite portion de droite.

**Patentansprüche**

1. Niveauanzeigevorrichtung mit

— einem am Sockel der Vorrichtung befestigten ersten Gehäuse (11),
— einer an ihrem unteren Ende einen Niveaudetektor (3) tragenden und auf einem mit einer vertikalen Gleitstange (9) fest verbundenen Halter (5) angeordneten Sonde (1), wobei die Gleitstange (9) in einer im Gehäuse befestigten Gleitführung (10) axial verschiebbar ist,
— einer in Nähe der Gleitstange (9) um ihre Achse relativ zum Gehäuse drehbar angeordnete und mittels einer händisch betätigbaren Antriebsvorrichtung (13, 14, 15) in Drehung versetzbaren Gewindespindel (12),
— einer mit der Gleitstange fest verbundenen Spindelmutter (17), deren Gewinde mit dem Gewinde der Gewindespindel (12) solcherart zusammenwirkt, daß die Gleitstange (9) bei Drehung der Gewindespindel (12) axial verschoben wird, und
— einer Transmissionseinrichtung (21, 22, 23), welche ein eine die Stellung der Gleitstange darstellende Spannung lieferndes erstes Potentiometer (24) steuert, dadurch gekennzeichnet, daß die Sonde höhenverstellbar angeordnet ist und die Spindelmutter (17) ausrückbar ist und unter der Wirkung einer Steuereinrichtung zwei Stellungen, u. zw.
— eine eingerückte Stellung, in welcher das Gewinde der Spindelmutter (17) mit dem Gewinde der Gewindespindel (12) solcherart zusammenwirkt, daß bei Drehung der Gewindespindel die Gleitstange (9) axial verschoben wird, und
— eine ausgerückte Stellung, in welcher das Gewinde der Spindelmutter vom Gewinde der Gewindespindel (12) entfernt ist, wobei in ausgerückter Stellung die Gleitstange (9) in der Gleitführung (10) frei verschiebbar ist,

annehmen kann, daß die Transmissionseinrichtung aus einem Zahnriemen (21) oder einer endlosen Kette besteht, welche(r) sich parallel zur Gleitstange erstreckt und über zwei Umlenkrollen, u. zw. eine obere Umlenkrolle (22) und eine untere Umlenkrolle (23), läuft, von welchen eine das erste Potentiometer (24) antreibt, wobei der Zahnriemen oder die Kette von der Gleitstange mittels eines Verbindungsstückes (20) angetrieben wird, und daß auf der unteren Umlenkrolle (23) eine Geschwindigkeitsbegrenzungseinrichtung angeordnet ist.

2. Vorrichtung nach Anspruch 1, dadurch gekennzeichnet, daß die ausrückbare Spindelmutter (17) durch eine Rückstellfeder belastet in einem zweiten Gehäuse (26) angeordnet ist, welches mit der vertikalen Gleitstange (9) über eine Platte (27) verbunden ist.

3. Vorrichtung nach Anspruch 1, dadurch gekennzeichnet, daß die das erste Potentiometer (24) antreibende Umlenkrolle (22) eine Bohrung aufweist, in welche die Achse (24') des ersten Potentiometers (24) eingreift und in welcher diese Achse befestigt ist, und daß der Körper des ersten Potentiometers (24) durch ein Plättchen (34) gegen Verdrehung blockiert ist, das selbst durch einen Zapfen am Verdrehen gehindert ist.

4. Vorrichtung nach Anspruch 1, dadurch gekennzeichnet, daß die Geschwindigkeitsbegrenzungseinrichtung eine zur Achse der unteren Umlenkrolle konzentrische und mit dem ersten Gehäuse (11) fest verbundene Glocke (51) aufweist und daß auf der unteren Umlenkrolle ein Teil (53) befestigt ist, welcher mit zwei Achsen (54) ausgestattet ist, die zwei durch Rückstellfedern belastete Massen (55) exzentrisch haltern, die sich bei Drehung unter dem Einfluß der Zentrifugalkraft stark an die Innenfläche der Glocke anlegen.

5. Vorrichtung nach Anspruch 1, dadurch gekennzeichnet, daß sie weiters ein drittes Steuergehäuse (36) aufweist, in welchem eine elektronische Einrichtung zum Unterteilen eines Segmentes variabler Länge in gleiche Teile angeordnet ist und in welchem die Vorderseite (37) Lumineszenzanzeigen für die Nummerierung in Teilen des Gemisches, einen ein zweites Potentiometer (40) für die Verstärkungsregelung steuernden Zählknopf und einen Knopf (41) aufweist, welcher ein drittes Potentiometer (42) steuert, das zum Rückstellen auf Null am Ende des Hubes dient.

6. Vorrichtung nach Anspruch 5, dadurch gekennzeichnet, daß die Vorderseite eine Platte (43) aufweist, die eine Tabelle mit zwei Eingängen besitzt, welche in Abhängigkeit des Durchmessers des Dosierbehälters für verschiedene Mengen des herzustellenden Gemisches die Anzahl der Teilstriche des zweiten Potentiometers (40) angibt.

7. Vorrichtung nach Anspruch 1, dadurch gekennzeichnet, daß der Niveaudetektor (3) aus einem Fühlkörper besteht, der an seinem unteren Rand einen solcherart angeordneten Vorsprung (45) aufweist, daß er dann, wenn er mit der Flüssigkeit in Berührung kommt, eine kapillare Voranzeige bewirkt, und welcher einen geneigten Bereich aufweist, welcher eine Marke (48) trägt, die den Augenblick anzeigt, zu welchem die Flüssigkeit das endgültige Niveau erreicht.

8. Vorrichtung nach Anspruch 7, dadurch gekennzeichnet, daß der an den Vorsprung (45) anschließende geneigte Bereich des unteren Randes nahe dem Vorsprung (45) einen kreisförmigen Bereich und daran anschließend einen geradlinigen Bereich aufweist, wobei

— der die Enden A und B aufweisende kreisförmige Bereich, wobei das Ende A dem Vorsprung zugekehrt ist, einen Radius R und einen Mittelpunkt X aufweist und
— der die Enden B und D aufweisende geradlinige Bereich relativ zur Horizontalen geneigt ist und die Verbindungsgerade von X nach B auf den geradlinigen Abschnitt senkrecht steht.

## Claims

1. A level detecting apparatus of the type comprising:

— a first case (11) fixed to the support of the apparatus,
— a probe (1) carrying at its lower end a level detector (3) mounted on a support element (5) integral with a vertical column (9) sliding axially in a slide (10) fixed in said case,
— a vertical threaded rod (12) mounted for pivoting about its axis with respect to the case in the vicinity of said column (9) and rotatable by means of a manually controllable drive device (13, 14, 15),
— a nut (17) integral with said column, whose thread cooperates with the thread of the threaded rod (12) so as to obtain axial movement of the column (9), when the threaded rod (12) rotates,
— a transmisison device (21, 22, 23) for controlling a first potentiometer (24) intended to supply a voltage representative of the position of the column,

characterized in that said probe is mounted with height adjustment capability, said nut (17) is disengageable and may take up, under the effect of a control device, two positions, namely:
— an engaged position in which the threads of the nut (17) cooperate with the thread of the threaded rod (12), so as to obtain axial movement of the column (9), during rotation of the threaded rod: and
— a disengaged position in which the threads of the nut are moved away from the thread of the threaded rod (12), this disengaged position allowing the column (9) to slide freely in the slide (10); in that said transmission device consists of a notched belt (21) or an endless chain, extending parallel to said column and mounted on two rollers, respectively upper (22) and lower (23), one of which drives said first potentiometer (24), said belt or said chain being driven by said column through a connecting piece (20) and in that, on the lower roller (23) is mounted a speed limiting device.

2. The apparatus according to claim 1, characterized in that said disengageable nut (17) is mounted, with spring return, in a second case (26) which is itself firmly secured to the vertical column (9) through a plate (27).

3. The apparatus according to claim 1, characterized in that the roller (22) which drives the first potentiometer (24) comprises a bore in which the end of the shaft (24') of said first potentiometer (24) is engaged and fixed and in that the body of the first potentiometer (24) is secured against rotation by a plate (34), itself prevented from rotating by a stud.

4. The apparatus according to claim 1, characterized in that said speed limiting device comprises, integral with the first case (11) a bell (51) concentric with the shaft of the lower roller and in that on said lower roller is fixed a piece (53) having two pins (54) which retain excentrically two fly-weights (55) returned by spring and which, when rotating, are energetically applied against the internal face of the bell under the effect of the centrifugal force.

5. The apparatus according to claim 1, characterized in that it further comprises a third control case (36) in which is housed an electronic device for dividing a segment of variable length into equal parts, and in which the front face (37) comprises luminescent display means (38) giving the notation in parts of mixture, a counting knob controlling a second amplification adjustment potentiometer (40) and a knob (41) which provides control of a third potentiometer (42) serving for resetting to zero at the end of travel.

6. The apparatus according to claim 5, characterized in that said front face comprises a plate (43) having a panel with two inputs giving the number of graduations of the second potentiometer (40) for different amounts of the mixture to be prepared, depending on the diameter of the mixture control receptacle.

7. The apparatus according to claim 1, characterized in that said level detector (3) consists of a plate having in its lower edge a protuberance (45) arranged so as to cause, when it comes into contact with the liquid, a capillary pre-flash and a sloping part bearing a mark (48) indicating the moment when the liquid reaches the final level.

8. The apparatus according to claim 7, characterized in that the sloping part of said lower edge adjacent the protuberance (45) comprises a circular portion near the protuberance (45) followed by a straight portion,

— the circular portion having for ends A and B, A being the end on the protuberance side, a radius R and a center X, and
— the straight portion having for ends B and D, said straight portion being inclined with respect to the horizontal, the straight section of ends X and B being perpendicular to said straight portion.

# Fig.1

0 034 537

Fig. 2

Fig. 3

Fig. 4

Fig. 5

Fig. 6

Fig. 7    Fig. 8    Fig. 9

Fig. 10